# EUROPÄISCHE PATENTSCHRIFT

(11) **EP 3 409 513 B1**
(45) Veröffentlichungstag und Bekanntmachung des Hinweises auf die Patenterteilung: **05.08.2020**
(21) Anmeldenummer: 17174053.3
(22) Anmeldetag: 01.06.2017
(51) Int. Cl.: B60G 13/00, B60G 15/07, B62D 7/18

(54) **SCHWENKLAGER**
STEERING KNUCKLE
SUPPORT DE ROUE

(43) Veröffentlichungstag der Anmeldung: 05.12.2018
(73) Patentinhaber: GF Casting Solutions Kunshan Co. Ltd., Kunshan City 215300 (CN)
(72) Erfinder: Graf, Christian, 78345 Iznang (DE); Hess, Stefan, 79618 Rheinfelden (DE); Mahnig, Dominik, 8200 Schaffhausen (CH)
(74) Vertreter: Fenner, Seraina

(56) Entgegenhaltungen:
- EP-A1- 2 614 969
- WO-A1-2013/153308
- US-S1- D 612 304
- Stefan Hess: "Georg Fischer Automotive "Lightweight by bionic design approach"", Workshop: "Functional and Innovative Lightweight Concepts and Materials for Hybrid and Electric Vehicles", Schlatt, CH, 9. Oktober 2014 (2014-10-09), XP055401685, Gefunden im Internet: URL:http://www.a3ps.at/site/sites/default/ files/Workshop_Lightweight/Stefan Hess_Lightweight by Bionic Design Approach.pdf [gefunden am 2017-08-28]

## Beschreibung

Die Erfindung betrifft ein Schwenklager für eine Radaufhängung insbesondere für eine Vorderachse eines Kraftfahrzeugs enthaltend eine Aufnahme Radlager, mindestens eine ober und untere Bremsträgeranbindung, eine Querlenkeranbindung, einen Lenkarm, eine Dämpferaufnahme und eine Tragrippe, wobei die Tragrippe sich aus einer Seite der Dämpferaufnahme erstreckt und die obere Bremsträgeranbindung an der Tragrippe angeordnet ist und einen Tragsteg, wobei sich der Tragsteg aus der anderen Seite der Dämpferaufnahme erstreckt.

Die EP 2 614 969 A1 offenbart ein Schwenklager welches eine Aufnahme Radlager, eine obere und untere Bremsträgeranbindung, eine Querlenkeranbindung, einen Lenkarm, eine Dämpferklemmung und eine Tragrippe aufweist, wobei das Schwenklager eine massive Bauform aufweist und die Öffnung zwischen Dämpferklemmung und Aufnahme Radlager nicht all zu gross ausfällt, so dass der Verbindungssteg und die Tragrippe zwischen Aufnahme Radlager und Dämpferklemmung massiv ausgebildet sind.

Nachteilig hierbei ist das hohe Gewicht des Schwenklagers.

US D612,304S offenbart ein Schwenklager gemäß dem Oberbegriff des Anspruchs 1.

Es ist Aufgabe der Erfindung ein Schwenklager vorzuschlagen das eine möglichst filigrane und damit leichte Bauform aufweist um Gewicht einzusparen, dennoch aber den Anforderungen an die Festigkeit entspricht.

Diese Aufgabe wird erfindungsgemäss durch ein Schwenklager für eine Radaufhängung gemäß Anspruch 1 gelöst.

Vorteilhaft ist es, wenn drei bis fünf Dome regelmässig um den Umfang angeordnet sind. Die Dome weisen eine stirnseitig bearbeitete Fläche auf, die der Befestigung des Radlagers dienen, wie auch die darin vorgesehenen Gewinde. Dies hat den Vorteil, dass das Radlager nicht mehr auf einem kompletten Kreis aufliegt sondern nur auf einer Anzahl vordefinierter Punkte bzw. den Stirnseiten der Dome.

Vorzugsweise befindet sich im unteren Bereich des Schwenklagers bzw. zwischen der Aufnahme Radlager und der Querlenkeranbindung eine Öffnung. Die Öffnung ist vorzugsweise durchgehend ausgebildet und dient ebenso der Gewichtsreduktion.

Eine vorteilhafte Ausgestaltung eines erfindungsgemässen Schwenklagers besteht auch darin, dass ein Tragsteg an der Dämpferaufnahme angeordnet ist, wobei der Tragsteg auf der anderen Seite der Dämpferaufnahme gegenüber der Tragrippe angeordnet ist. Der Tragsteg erstreckt sich bis zur Aufnahme Radlager bzw. der Mantelfläche der Aufnahme Radlager und ist mit dieser verbunden und geht dann in den Lenkarm über.

Bevorzugterweise weist der Lenkarm mindestens eine Öffnung auf, wodurch der Lenkarm filigran gestaltet ist und auch hier wiederum Gewicht eingespart wird.

Das Schwenklager ist als ein einteiliges Teil ausgebildet, vorzugsweise als Gussteil. Vorteilhafte Gussarten zu dessen Herstellung sind Sphäroguss wie auch Leichtmetallguss bzw. Aluminiumguss.

Als vorteilhaft hat sich auch gezeigt, wenn in der Dämpferaufnahme ein Durchbruch angeordnet ist der ebenfalls zur Gewichtsreduktion beiträgt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Schwenklagers mit einer Halbschalendämpferaufnahme von der Fahrzeuginnenseite her gesehen,
- Fig. 2: eine dreidimensionale Ansicht eines erfindungsgemässen Schwenklagers mit einer Halbschalendämpferaufnahme von der Fahrzeugaussenseite her gesehen,
- Fig. 3: eine dreidimensionale Ansicht eines erfindungsgemässen Schwenklagers mit einer umschliessenden Klemmung als Dämpferaufnahme von der Fahrzeuginnenseite her gesehen und
- Fig. 4: eine dreidimensionale Ansicht eines erfindungsgemässen Schwenklagers mit einer umschliessenden Klemmung als Dämpferaufnahme von der Fahrzeugausseite her gesehen,

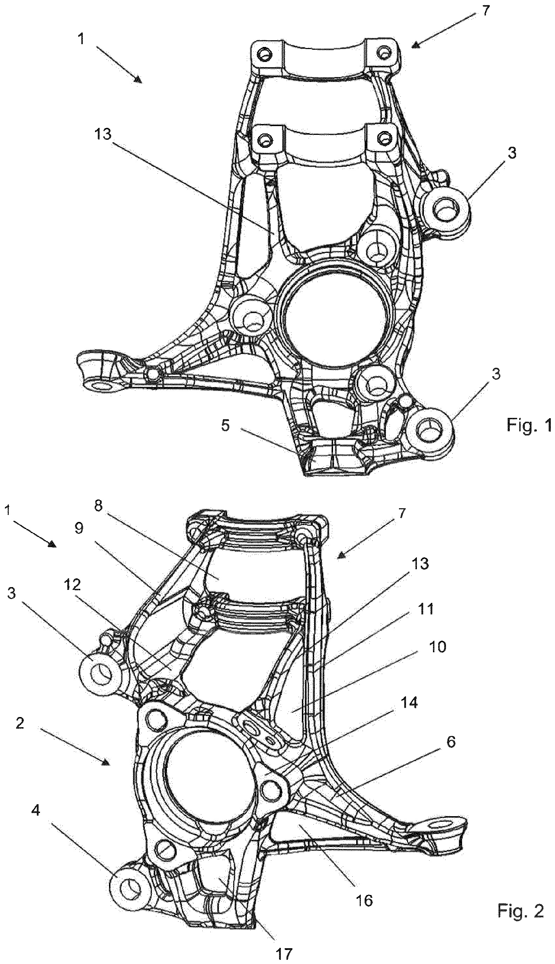

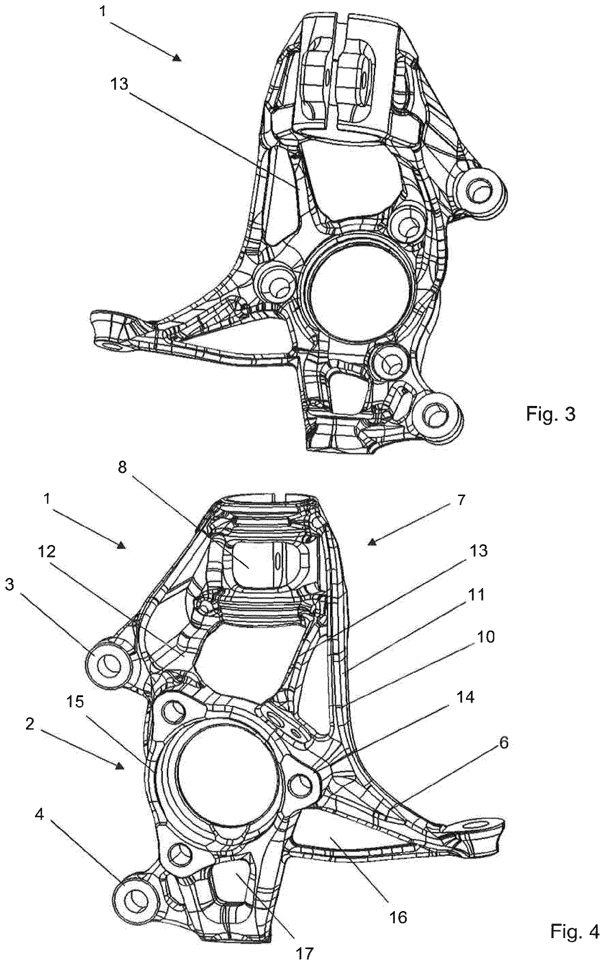

Die in Fig. 1 dargestellte Zeichnung zeigt ein erfindungsgemässes Schwenklager 1 für eine Radaufhängung insbesondere für eine Vorderachse eines Kraftfahrzeugs. Das Schwenklager 1 weist eine Aufnahme Radlager 2 auf in der das Radlager angeordnet und befestigt wird. Das Schwenklager 1 weist eine obere Bremsträgeranbindung 3 sowie eine untere Bremsträgeranbindung 4 auf, selbstverständlich sind auch weitere Bremsträgeranbindungen möglich zu integrieren. Eine Querlenkeranbindung 5 ist im unteren Bereich des Schwenklagers 1 angeordnet. Des Weiteren weist das Schwenklager 1 einen Lenkarm 6 auf der ebenfalls am Schwenklager 1 integral angeordnet ist bzw. das Schwenklager ist als einstückiges Teils ausgebildet, vorzugsweise aus Guss. Zur Anbindung des Federbeins an das Schwenklager 1 beinhaltet das Schwenklager 1 im oberen Teil eine Dämpferaufnahme 7, wobei in den Fig. 1 und 2 eine als Halbschale ausgebildete Dämpferaufnahme 7 am Schwenklager 1 angeordnet ist und in den Fig. 3 und 4 eine Dämpferaufnahme 7 die das Federbein komplett umschliesst und klemmt. Selbstverständlich sind auch weitere Ausführungsformen einer Dämpferaufnahme denkbar, diese ist entsprechend den Anforderungen zu wählen. Die abgebildeten Ausführungsformen weisen in der Dämpferaufnahme einen Durchbruch 8 auf um auch hier Gewicht einzusparen, selbstverständlich sind aber auch geschlossene Dämpferaufnahmen vorstellbar.

Auf der Seite der Bremsträgeranbindungen 3, 4 erstreckt sich vom Aussenumfang der Dämpferaufnahme 7 eine Tragrippe 9, die dann zur Aufnahme Radlager 2 verläuft. An der Tragrippe 9 angeordnet ist die obere Bremsträgeranbindung 3. Zudem weist das Schwenklager 1 auf der anderen Seite der Dämpferaufnahme 7 einen Tragsteg 11 auf der sich in den Lenkarm 6 übergeht, wobei der Tragsteg 11 dazwischen mit der Aufnahme Radlager 2 verbunden ist. Das Schwenklager 1 weist mindestens eine Öffnung 10 auf, die zwischen der Dämpferaufnahme 7 und der Aufnahme Radlager 2 angeordnet ist. Die Öffnung 10 wird auf der einen Seite durch den Tragsteg 11 begrenzt der sich von der Dämpferaufnahme 7 bis in den Lenkarm 6 erstreckt und auf der anderen Seite wird die Öffnung 10 durch die Tragrippe 9 begrenzt bzw. die obere Fläche Aufnahme Radnabe 12 in die Tragrippe 9 übergeht. Die Öffnung 10 wird durch eine Strebe 13 unterteilt, wobei die Strebe 13 von der Dämpferaufnahme 7 oder dem Tragsteg 11 ausgeht und sich bis zur Aufnahme Radlager 2 hin erstreckt.

Rund um die Aufnahme Radnabe 2 sind Dome 14 angeordnet, vorzugsweise 3 bis 5 Stück die regelmässig entlang des Umfangs der Aufnahme Radlager 2 verteilt sind. Die Dome 14 dienen dem Aufliegen und Befestigen des Radlagers. Zwischen den Domen 14 verläuft ein Steg 15 der eine geringere Höhe als die überabeiteten Dome 14 aufweist, damit das Radlager auf den Domen 14 und nicht auf dem Steg 15 aufliegt.

Zur weiteren Gewichtsreduktion ist im Lenkarm 6 eine Öffnung 16 angeordnet die ebenfalls durchgehend ausgebildet ist.

Im unteren Bereich des Schwenklagers 1 befindet sich vorzugsweise wiederum eine Öffnung 17 die zwischen Aufnahme Radlager 2 und Querlenkeranbindung angeordnet ist.

### Bezugszeichenliste

- 1: Schwenklager
- 2: Aufnahme Radlager
- 3: Obere Bremsträgeranbindung
- 4: Untere Bremsträgeranbindung
- 5: Querlenkeranbindung
- 6: Lenkarm
- 7: Dämpferaufnahme
- 8: Durchbruch
- 9: Tragrippe
- 10: Öffnung
- 11: Tragsteg
- 12: Obere Fläche Aufnahme Radlager
- 13: Strebe
- 14: Dom
- 15: Steg
- 16: Öffnung Lenkarm
- 17: Öffnung

## Patentansprüche

1. Schwenklager (1) für eine Radaufhängung insbesondere für eine Vorderachse eines Kraftfahrzeugs enthaltend eine Aufnahme Radlager (2), mindestens eine obere und untere Bremsträgeranbindung (3, 4), eine Querlenkeranbindung (5), einen Lenkarm (6), eine Dämpferaufnahme (7), eine Tragrippe (9), wobei sich die Tragrippe (9) aus einer Seite der Dämpferaufnahme (7) erstreckt und die obere Bremsträgeranbindung (3) an der Tragrippe (7) angeordnet ist und einen Tragsteg (11), wobei sich der Tragsteg (11) aus der anderen Seite der Dämpferaufnahme (7) erstreckt, wobei das Schwenklager (1) mindestens eine Öffnung (10) aufweist, wobei die Öffnung (10) im Bereich zwischen der Aufnahme Radlager (2) und der Dämpferaufnahme (7) angeordnet ist, wobei die Öffnung (10) durch eine Strebe (13), die sich von der Dämpferaufnahme (7) oder dem Tragsteg (11) bis zur Aufnahme Radlager (2) erstreckt, unterteilt ist, wobei Dome (14) entlang des Umfangs der Aufnahme Radlager angeordnet sind und wobei ein umlaufender Steg (15) die Dome (14) verbindet, **dadurch gekennzeichnet, dass** die Höhe des Stegs (15) geringer ist als die Höhe der Dome (14), damit ein Radlager auf den Domen (14) und nicht auf dem Steg (15) aufliegt.

2. Schwenklager (1) nach Anspruch 1, **dadurch gekennzeichnet, dass** die Dome (14) stirnseitig überarbeitet sind und zur Befestigung des Radlagers dienen.

3. Schwenklager (1) nach einem der Ansprüche 1 bis 2, **dadurch gekennzeichnet, dass** zwischen der Aufnahme Radlager (2) und der Querlenkeranbindung (5) eine Öffnung (17) angeordnet ist.

4. Schwenklager (1) nach einem der Ansprüche 1 bis 3, **dadurch gekennzeichnet, dass** der Tragsteg (11) über die Aufnahme Radlager (2) in den Lenkarm (6) übergeht.

5. Schwenklager (1) nach einem der Ansprüche 1 bis 4, **dadurch gekennzeichnet, dass** im Lenkarm (6) mindestens eine Öffnung (16) angeordnet ist.

6. Schwenklager (1) nach einem der vorangehenden Ansprüche, **dadurch gekennzeichnet, dass** das Schwenklager (1) ein Gussteil ist, vorzugsweise aus Sphäro- oder Leichtmetallguss.

7. Schwenklager (1) nach einem der vorangehenden Ansprüche, **dadurch gekennzeichnet, dass** die Dämpferaufnahme (7) einen Durchbruch (8) aufweist.

## Claims

1. Swivel bearing (1) for a wheel suspension system, in particular for a front axle of a motor vehicle comprising a wheel bearing seat (2), at least one upper and lower brake carrier attachment (3, 4), a control arm attachment (5), a steering link (6), a damper mount (7), a support rib (9), the support rib (9) extending out of one side of the damper mount (7), and the upper brake carrier attachment (3) being arranged on the support rib (9), and a support web (11), the support web (11) extending out of the other side of the damper mount (7), the swivel bearing (1) having at least one opening (10), the opening (10) being arranged in the region between the wheel bearing seat (2) and the damper mount (7), the opening (10) being divided by way of a strut (13) which extends from the damper mount (7) or the support web (11) as far as the wheel bearing seat (2), domes (14) being arranged along the circumference of the wheel bearing seat, and a circumferential web (15) connecting the domes (14), **characterized in that** the height of the web (15) is lower than the height of the domes (14), in order that a wheel bearing lies on the domes (14) and not on the web (15) .

2. Swivel bearing (1) according to Claim 1, **characterized in that** the domes (14) are reworked on the front side and serve to fasten the wheel bearing.

3. Swivel bearing (1) according to either of Claims 1 and 2, **characterized in that** an opening (17) is arranged between the wheel bearing seat (2) and the control arm attachment (5).

4. Swivel bearing (1) according to one of Claims 1 to 3, **characterized in that** the support web (11) merges via the wheel bearing seat (2) into the steering link (6).

5. Swivel bearing (1) according to one of Claims 1 to 4, **characterized in that** at least one opening (16) is arranged in the steering link (6).

6. Swivel bearing (1) according to one of the preceding claims, **characterized in that** the swivel bearing (1) is a cast part, preferably made from spheroidal graphite iron or light metal casting.

7. Swivel bearing (1) according to one of the preceding claims, **characterized in that** the damper mount (7) has an aperture (8).

## Revendications

1. Palier pivotant (1) pour une suspension de roue, en particulier pour un essieu avant d'un véhicule automobile, contenant un logement de palier de roue (2), au moins une liaison de support de frein supérieure et inférieure (3, 4), une liaison de bras oscillant transversal (5), un bras de direction (6), un logement d'amortisseur (7), une nervure de support (9), la nervure de support (9) s'étendant depuis un côté du logement d'amortisseur (7) et la liaison de support de frein supérieure (3) étant disposée au niveau de la nervure de support (9), et une membrure de support (11), la membrure de support (11) s'étendant depuis l'autre côté du logement d'amortisseur (7), le palier pivotant (1) présentant au moins une ouverture (10), l'ouverture (10) étant disposée dans la région entre le logement de palier de roue (2) et le logement d'amortisseur (7), l'ouverture (10) étant divisée par une entretoise (13) qui s'étend depuis le logement d'amortisseur (7) ou depuis la membrure de support (11) jusqu'au logement de palier de roue (2), des dômes (14) étant disposés le long de la périphérie du logement de palier de roue et une membrure périphérique (15) reliant les dômes (14),
**caractérisé en ce que** la hauteur de la membrure (15) est inférieure à la hauteur des dômes (14) afin qu'un palier de roue repose sur les dômes (14) mais pas sur la membrure (15).

2. Palier pivotant (1) selon la revendication 1, **caractérisé en ce que** les dômes (14) sont retravaillés du côté frontal et servent à la fixation du palier de roue.

3. Palier pivotant (1) selon l'une quelconque des revendications 1 et 2, **caractérisé en ce qu'**entre le logement de palier de roue (2) et la liaison de bras oscillant transversal (5) est disposée une ouverture (17).

4. Palier pivotant (1) selon l'une quelconque des revendications 1 à 3, **caractérisé en ce que** la membrure de support (11) se prolonge au-delà du logement de palier de roue (2) dans le bras de direction (6).

5. Palier pivotant (1) selon l'une quelconque des revendications 1 à 4, **caractérisé en ce qu'**au moins une ouverture (16) est disposée dans le bras de direction (6).

6. Palier pivotant (1) selon l'une quelconque des revendications précédentes, **caractérisé en ce que** le palier pivotant (1) est une pièce moulée, de préférence en fonte nodulaire ou en fonte de métal léger.

7. Palier pivotant (1) selon l'une quelconque des revendications précédentes, **caractérisé en ce que** le logement d'amortisseur (7) présente un orifice (8) .
